# EUROPEAN PATENT SPECIFICATION

(11) **EP 4 180 757 B1**
(45) Date of publication and mention of the grant of the patent: **08.01.2025**
(21) Application number: 20945570.8
(22) Date of filing: 13.07.2020
(51) Int. Cl.: F28F 9/02, F24F 12/00, F28F 3/04, F28D 9/00, F28F 9/00

(54) **HEAT EXCHANGE ELEMENT AND HEAT EXCHANGE-TYPE VENTILATION DEVICE**
WÄRMETAUSCHERELEMENT UND BELÜFTUNGSVORRICHTUNG VOM WÄRMETAUSCHERTYP
ÉLÉMENT D'ÉCHANGE DE CHALEUR ET DISPOSITIF DE VENTILATION DE TYPE À ÉCHANGE DE CHALEUR

(43) Date of publication of application: 17.05.2023
(73) Proprietor: MITSUBISHI ELECTRIC CORPORATION, Chiyoda-ku Tokyo 100-8310 (JP)
(72) Inventor: MIYAKE, Fumiyasu, Tokyo 102-0073 (JP); SHIBATA, Keiko, Tokyo 102-0073 (JP); SOTOKAWA, Hajime, Tokyo 100-8310 (JP)
(74) Representative: Witte, Weller & Partner Patentanwälte mbB
(86) International application number: PCT/JP2020/027272
(87) International publication number: WO 2022/013925

(56) References cited:
- EP-A2- 1 361 406
- WO-A1-2007/045064
- GB-A- 1 205 933
- JP-A- H10 141 876
- JP-A- H11 230 688
- US-A- 4 535 840
- US-A- 5 301 747
- US-A1- 2004 226 685
- US-A1- 2017 211 826

## Description

### Field

The present disclosure relates to a heat-exchange element that performs heat exchange by allowing two fluids to pass through between stacked plates and a heat-exchange ventilation apparatus.

### Background

Flow forms of two-fluid heat exchange used in heat-exchange elements of this type include a cross-flow form in which two fluids flow perpendicularly to each other and a counter-flow form in which two fluids flow in opposite directions, facing each other. Under the same conditions of pressure loss, the amount of heat exchange per unit volume is theoretically larger in the counter-flow form.

A counter-flow heat-exchange element typically includes a counter-flow portion that performs heat exchange, and header portions that change the directions of a supply air current and an exhaust air current to opposite directions in the counter-flow portion between inlet and outlet ports and the counter-flow portion. Patent Literature 1 includes a central portion corresponding to the counter-flow portion and end portions corresponding to the header portions. The end portions include a plurality of equidistant parallel flow paths from the inlet and outlet ports toward the central portion.

Patent Literature 2, according to its abstract, relates to heat exchangers used for heat recovery in ventilation and air-conditioning systems. The plate-type heat exchanger packet comprises alternating plates which are provided with triangle end faces forming working media channels, wherein the packet flat plates alternate with the shaped plates whose cross-section shape, in the area defined by a triangle in a direction parallel to the bases of triangles, is designed in such a way that it is saw-like or sinusoidal or embodied in the form of periodical or not-periodical function which has a single common point with each flat plates restricting said function on both sides for the period**.** The triangle end faces of the shaped or flat plates forming the working media channels are embodied in the form of planar figures placed on the plane of said channels. Thereby, it is made possible to increase the heat-exchanging surface area and to enhance heat exchange.

Patent Literature 3 relates to improvements in or relating to plate heat exchangers.

Patent Literature 4, according to its abstract, states that, to enable the shape keeping at stacking, and also, reduce pressure loss, and make compact, this heat exchanger is equipped with a corrugated part which forms a passage in the direction of wave face, a partition plate which has heat exchange property, being constituted of flat parts for allowing air currents to flow in or out in specified direction on both sides in wave face direction above the corrugated part, and a shape keeping plate in the shape of a plane whose length in the direction of passage is shorter than the length of the partition plate, and the partition plates and the shape keeping plates are stacked alternately so that the corrugated parts and the shape keeping plates abut on each other, and that the fellow planes may face each other. Hereby, different passages are made through the partition plates.

Patent Literature 5, according to its abstract, states that an internally manifolded plate for a plate/fin-type heat exchanger comprises a side port contiguous with and transverse to at least one channel, and wherein the channel is contiguous with an end port. The plate may be of unibody construction and also include integral side and end external manifolds.

### Citation List

### Patent Literature

Patent Literature 1: US 2017/0370609 A
Patent Literature 2: WO 2007/045064 A1
Patent Literature 3: GB 1 205 933 A
Patent Literature 4: JP H10 141876 A
Patent Literature 5: US 4 535 840 A

### Summary

### Technical Problem

In Patent Literature 1, since the end portions have the plurality of equidistant parallel flow paths from the inlet and outlet ports toward the central portion, air currents in the end portions are not uniform flows, resulting in large pressure loss and causing flow stagnation.

The present disclosure has been made in view of the above. It is an object of the present disclosure to provide a heat-exchange element that can reduce pressure loss in header portions and allows air currents to uniformly flow into a counter-flow portion, and a heat-exchange ventilation apparatus.

### Solution to Problem

According to the present disclosure, a heat-exchange element and a heat-exchange ventilation apparatus as defined in the independent claims are provided. Further embodiments of the claimed invention are defined in the dependent claims. Although the claimed invention is only defined by the claims, the below embodiments, examples, and aspects are present for aiding in understanding the background and advantages of the claimed invention.

### Advantageous Effects of Invention

The present disclosure can reduce pressure loss in the header portions and allows air currents to uniformly flow into the counter-flow portion.

### Brief Description of Drawings

FIG. 1 is an external perspective view illustrating a schematic configuration of a heat-exchange element according to an embodiment.
FIG. 2 is a perspective view illustrating a first partition plate of the heat-exchange element according to the embodiment.
FIG. 3 is a perspective view illustrating a second partition plate of the heat-exchange element according to the embodiment.
FIG. 4 is a cross-sectional view illustrating a stacked state of a first counter-flow portion and a second counter-flow portion of the heat-exchange element according to the embodiment.
FIG. 5 is a plan view illustrating an arrangement of a plurality of first ribs of a first header portion of the heat-exchange element according to the embodiment.
FIG. 6 is a plan view for explaining, in more detail, end shapes and others of the plurality of first ribs of the first header portion of the heat-exchange element according to the embodiment.
FIG. 7 is a plan view illustrating a positional relationship between a downstream rib and flow paths in the first counter-flow portion of the heat-exchange element according to the embodiment.
FIG. 8 is a plan view illustrating an arrangement of a plurality of second ribs of a second header portion of the heat-exchange element according to the embodiment.
FIG. 9 is a plan view for explaining, in more detail, end shapes and others of the plurality of second ribs of the second header portion of the heat-exchange element according to the embodiment.
FIG. 10 is a diagram illustrating an air velocity distribution in a header portion with a rib arrangement according to a comparative example.
FIG. 11 is a diagram illustrating an air velocity distribution in the first header portion with the rib arrangement according to the present embodiment.
FIG. 12 is a diagram illustrating an air velocity distribution in the first header portion with the rib arrangement according to the present embodiment.
FIG. 13 is a conceptual diagram illustrating a heat-exchange ventilation apparatus in which the heat-exchange element of the present embodiment is installed.

### Description of Embodiments

Hereinafter, a heat-exchange element and a heat-exchange ventilation apparatus according to an embodiment will be described in detail with reference to the drawings.

### Embodiment.

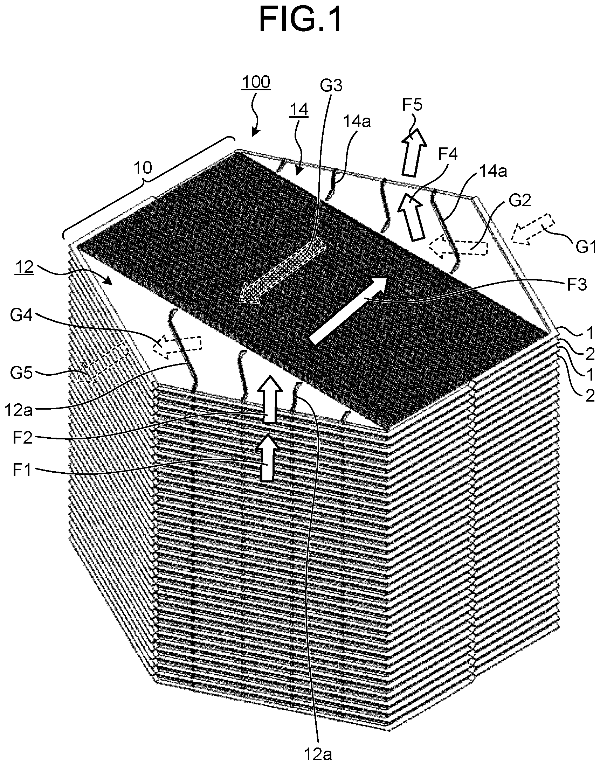

FIG. 1 is an external perspective view illustrating a schematic configuration of a counter-flow heat-exchange element 100 according to the present embodiment. The heat-exchange element 100 is formed in a hexagonal column shape. The heat-exchange element 100 includes a plurality of first partition plates 1 and a plurality of second partition plates 2. The first partition plates 1 and the second partition plates 2 are stacked alternately. The first partition plates 1 and the second partition plates 2 are each formed of a hexagonal sheet of resin, metal, or the like.

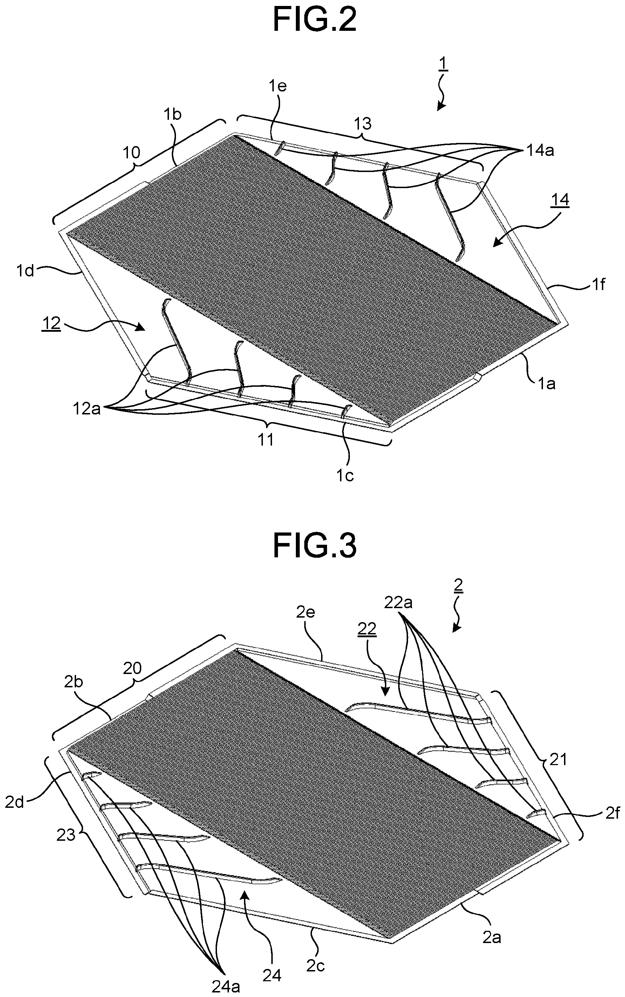

FIG. 1, in which one of the first partition plates 1 is disposed in the top layer, illustrates only the structure of the first partition plates 1 and does not illustrate the structure of the second partition plates 2. The structure of the first partition plates 1 and the structure of the second partition plates 2 will be described later with reference to FIGS. 2 and 3. As illustrated in FIG. 1, first flow paths for which a flow of air is indicated by solid arrows F1, F2, F3, F4, and F5 are formed between the front surface of each first partition plate 1 and the back surface of the adjacent second partition plate 2. Second flow paths for which a flow of air is indicated by dashed arrows G1, G2, G3, G4, and G5 are formed between the back surface of each first partition plate 1 and the front surface of the adjacent second partition plate 2. The front surface of the first partition plate 1 refers to a surface on which ribs (described later) for forming the first flow paths are formed. The back surface of the first partition plate 1 refers to a surface opposite to the front surface. The front surface of the second partition plate 2 refers to a surface on which ribs (described later) for forming the second flow paths are formed. The back surface of the second partition plate 2 refers to a surface opposite to the front surface.

FIG. 2 is a perspective view illustrating one of the first partition plates 1 of the heat-exchange element 100 according to the present embodiment. FIG. 2 illustrates a state where the heat-exchange element 100 is viewed from the same direction as in FIG. 1. The first partition plate 1 includes a first counter-flow portion 10 as a heat-exchange portion, a first inlet 11, a first header portion 12 that is a portion connecting the first inlet 11 and the first counter-flow portion 10, a first outlet 13, and a second header portion 14 that is a portion connecting the first outlet 13 and the first counter-flow portion 10. The first partition plate 1 includes six edges 1a, 1b, 1c, 1d, 1e, and 1f. The first counter-flow portion 10 is formed in a region sandwiched between the first edge 1a and the second edge 1b. The third edge 1c and the fourth edge 1d are disposed, for example, on one side of the first edge 1a and the second edge 1b. The fifth edge 1e and the sixth edge 1f are disposed, for example, on the opposite side of the first edge 1a and the second edge 1b. The first header portion 12 in a triangular shape is disposed in a region enclosed by the third edge 1c, the fourth edge 1d, and the first counter-flow portion 10. The second header portion 14 in a triangular shape is disposed in a region enclosed by the fifth edge 1e, the sixth edge 1f, and the first counter-flow portion 10.

Six edge portions of the first partition plate 1 are formed such that openings are formed only at the portion of the third edge 1c corresponding to the first inlet 11 and the portion of the fifth edge 1e corresponding to the first outlet 13, and the portions of the first edge 1a, the second edge 1b, the fourth edge 1d, and the sixth edge 1f are closed when the second partition plate 2 is placed thereon. That is, the portions of the first edge 1a, the second edge 1b, the fourth edge 1d, and the sixth edge 1f are formed, for example, in a rising shape to be closed. In the first partition plate 1 illustrated in FIG. 2, a part (about a half in the illustration) of the first edge 1a adjacent to the third edge 1c is not formed in the rising shape to form an opening. Likewise, a part (about a half in the illustration) of the second edge 1b adjacent to the fifth edge 1e is not formed in the rising shape to form an opening. Furthermore, in a corner area of the first counter-flow portion 10 with the point of intersection of the first edge 1a and the third edge 1c as the corner, a corrugated body 10a as the heat-exchange portion to be described later is not formed. Likewise, in a corner area of the first counter-flow portion 10 with the point of intersection of the second edge 1b and the fifth edge 1e as the corner, the corrugated body 10a as the heat-exchange portion to be described later is not formed.

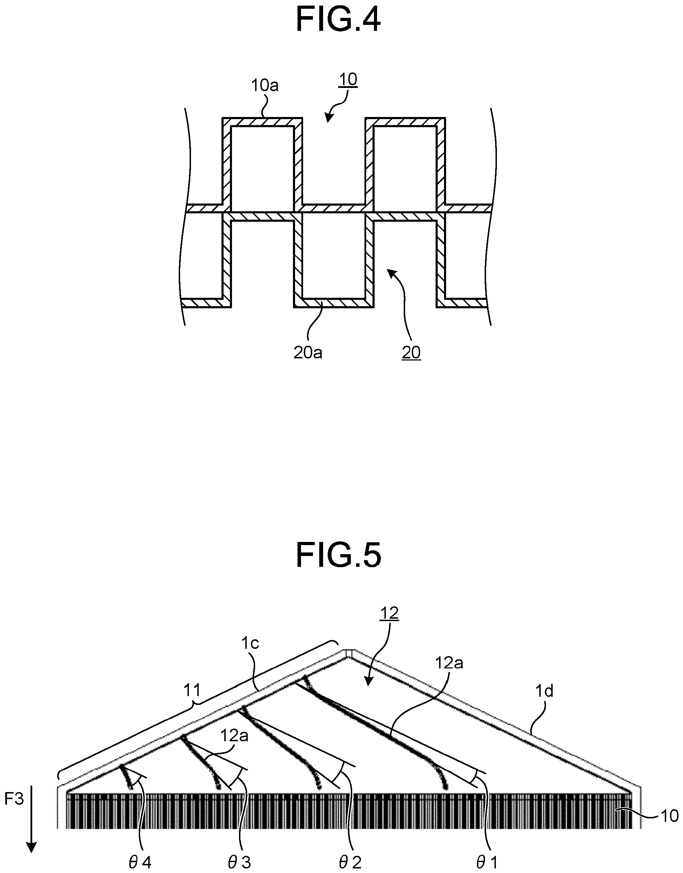

The first counter-flow portion 10 includes a plurality of flow paths extending in parallel to the first edge 1a and the second edge 1b. The plurality of flow paths formed in the first counter-flow portion 10 correspond to third flow paths in the claims. FIG. 4 is a partial cross-sectional view illustrating an example of the first counter-flow portion 10. FIG. 4 illustrates a cross-sectional view with the first edge 1a and the second edge 1b cut perpendicularly. The first counter-flow portion 10 includes the corrugated body 10a having a corrugated shape in which recesses and protrusions are formed alternately and continuously. The plurality of flow paths in the first counter-flow portion 10 as the heat-exchange portion is not limited to the structure of FIG. 4 and may adopt other structures as long as a plurality of flow paths extending in parallel to the first edge 1a and the second edge 1b are formed.

As illustrated in FIG. 2, a plurality of protruded first ribs 12a are formed at intervals on the first header portion 12. A plurality of protruded second ribs 14a are formed at intervals on the second header portion 14. The first ribs 12a and the second ribs 14a are formed by press working, vacuum forming, or the like.

The plurality of first ribs 12a extend from the third edge 1c along the fourth edge 1d toward the first counter-flow portion 10. Each of the plurality of first ribs 12a has an S shape. The closer to the fourth edge 1d the first ribs 12a are, the longer their lengths are. The plurality of second ribs 14a extend from the fifth edge 1e along the sixth edge 1f toward the first counter-flow portion 10. Each of the plurality of second ribs 14a has an S shape. The closer to the sixth edge 1f the second ribs 14a are, the longer their lengths are. Details of the first ribs 12a and the second ribs 14a will be described later.

FIG. 3 is a perspective view illustrating one of the second partition plates 2 of the heat-exchange element 100 according to the embodiment. FIG. 3 illustrates a state where the heat-exchange element 100 is viewed from the same direction as in FIG. 1. The second partition plate 2 includes a second counter-flow portion 20 as a heat-exchange portion, a second inlet 21, a fourth header portion 22 that is a portion connecting the second inlet 21 and the second counter-flow portion 20, a second outlet 23, and a third header portion 24 that is a portion connecting the second outlet 23 and the second counter-flow portion 20. The second partition plate 2 includes six edges 2a, 2b, 2c, 2d, 2e, and 2f. The second counter-flow portion 20 is formed in a region sandwiched between the seventh edge 2a and the eighth edge 2b. The ninth edge 2c and the tenth edge 2d are disposed, for example, on one side of the seventh edge 2a and the eighth edge 2b. The eleventh edge 2e and the twelfth edge 2f are disposed, for example, on the opposite side of the seventh edge 2a and the eighth edge 2b. The third header portion 24 in a triangular shape is disposed in a region enclosed by the ninth edge 2c, the tenth edge 2d, and the second counter-flow portion 20. The fourth header portion 22 in a triangular shape is disposed in a region enclosed by the eleventh edge 2e, the twelfth edge 2f, and the second counter-flow portion 20.

Six edge portions of the second partition plate 2 are formed such that openings are formed only at the portion of the twelfth edge 2f corresponding to the second inlet 21 and the portion of the tenth edge 2d corresponding to the second outlet 23, and the portions of the seventh edge 2a, the eighth edge 2b, the ninth edge 2c, and the eleventh edge 2e are closed when the first partition plate 1 is placed thereon. That is, the portions of the seventh edge 2a, the eighth edge 2b, the ninth edge 2c, and the eleventh edge 2e are formed, for example, in a rising shape to be closed. In the second partition plate 2 illustrated in FIG. 3, a part (about a half in the illustration) of the seventh edge 2a adjacent to the twelfth edge 2f is not formed in the rising shape to form an opening. Likewise, a part (about a half in the illustration) of the eighth edge 2b adjacent to the tenth edge 2d is not formed in the rising shape to form an opening. Furthermore, in a corner area of the second counter-flow portion 20 with the point of intersection of the seventh edge 2a and the twelfth edge 2f as the corner, a corrugated body 20a as the heat-exchange portion to be described later is not formed. Likewise, in a corner area of the second counter-flow portion 20 with the point of intersection of the eighth edge 2b and the tenth edge 2d as the corner, the corrugated body 20a as the heat-exchange portion to be described later is not formed.

The second counter-flow portion 20 includes a plurality of flow paths extending in parallel to the seventh edge 2a and the eighth edge 2b. The plurality of flow paths formed in the second counter-flow portion 20 correspond to fourth flow paths in the claims. As illustrated in FIG. 4, the second counter-flow portion 20 includes the corrugated body 20a having a corrugated shape in which recesses and protrusions are formed alternately and continuously. The plurality of flow paths in the second counter-flow portion 20 as the heat-exchange portion is not limited to the structure of FIG. 4 and may adopt other structures as long as a plurality of flow paths extending in parallel to the seventh edge 2a and the eighth edge 2b are formed.

As illustrated in FIG. 3, a plurality of protruded third ribs 24a are formed at intervals on the third header portion 24. A plurality of protruded fourth ribs 22a are formed at intervals on the fourth header portion 22. The third ribs 24a and the fourth ribs 22a are formed by press working, vacuum forming, or the like.

The plurality of third ribs 24a extend from the tenth edge 2d along the ninth edge 2c toward the second counter-flow portion 20. Each of the plurality of third ribs 24a has an inverted S shape. The closer to the ninth edge 2c the third ribs 24a are, the longer their lengths are. The plurality of fourth ribs 22a extend from the twelfth edge 2f along the eleventh edge 2e toward the second counter-flow portion 20. Each of the plurality of fourth ribs 22a has an inverted S shape. The closer to the eleventh edge 2e the fourth ribs 22a are, the longer their lengths are. Details of the third ribs 24a and the fourth ribs 22a will be described later.

In the heat-exchange element 100 according to the embodiment, the first partition plates 1 and the second partition plates 2 are stacked alternately such that the first edge 1a is placed on the seventh edge 2a, and the third edge 1c is placed on the ninth edge 2c. More specifically, furthermore, the second edge 1b is placed on the eighth edge 2b, the fourth edge 1d is placed on the tenth edge 2d, the fifth edge 1e is placed on the eleventh edge 2e, and the sixth edge 1f is placed on the twelfth edge 2f.

By placing the first partition plates 1 and the second partition plates 2 on top of each other, the first inlet 11 is formed between the third edge 1c of the first partition plate 1 and the ninth edge 2c of the second partition plate 2. The first outlet 13 is formed between the fifth edge 1e of the first partition plate 1 and the eleventh edge 2e of the second partition plate 2. The second inlet 21 is formed between the twelfth edge 2f of the second partition plate 2 and the sixth edge 1f of the first partition plate 1. The second outlet 23 is formed between the tenth edge 2d of the second partition plate 2 and the fourth edge 1d of the first partition plate 1.

Further, by placing the first partition plates 1 and the second partition plates 2 on top of each other, the first flow paths indicated by the arrows F1, F2, F3, F4, and F5 illustrated in FIG. 1 are formed by the first ribs 12a, the plurality of flow paths in the first counter-flow portion 10, and the second ribs 14a. Furthermore, the second flow paths indicated by the arrows G1, G2, G3, G4, and G5 illustrated in FIG. 1 are formed by the fourth ribs 22a, the plurality of flow paths in the second counter-flow portion 20, and the third ribs 24a.

As indicated by the arrows F1, F2, F3, F4, and F5 illustrated in FIG. 1, air flown into the first inlet 11 is changed in flow direction to the first counter-flow portion 10 in the first header portion 12 and passes through the first counter-flow portion 10, and is changed in flow direction to the first outlet 13 in the second header portion 14 and is discharged from the first outlet 13. As indicated by the arrows G1, G2, G3, G4, and G5 illustrated in FIG. 1, air flown into the second inlet 21 is changed in flow direction to the second counter-flow portion 20 in the fourth header portion 22 and passes through the second counter-flow portion 20, and is changed in flow direction to the second outlet 23 in the third header portion 24 and is discharged from the second outlet 23. In a portion where the first counter-flow portion 10 is placed on the second counter-flow portion 20, air flows in opposite directions, facing each other, and heat exchange is performed between two fluids.

The first inlet 11, the plurality of first ribs 12a, the plurality of flow paths in the first counter-flow portion 10, the plurality of second ribs 14a, and the first outlet 13, and the second outlet 23, the plurality of third ribs 24a, the plurality of flow paths in the second counter-flow portion 20, the plurality of fourth ribs 22a, and the second inlet 21 are arranged such that the first flow paths indicated by the arrows F1, F2, F3, F4, and F5 and the second flow paths indicated by the arrows G1, G2, G3, G4, and G5 illustrated in FIG. 1 are symmetrical about an axis that connects the point of intersection of the fifth edge 1e and the sixth edge 1f of the first partition plate 1 and the point of intersection of the third edge 1c and the fourth edge 1d of the first partition plate 1.

FIG. 5 is a plan view illustrating an arrangement of the plurality of first ribs 12a of the first header portion 12 that is an inlet-side header. The fourth header portion 22 has the same arrangement. The plurality of first ribs 12a extend in different directions. Of the plurality of first ribs 12a, the extending direction of a rib far from the fourth edge 1d adjacent to the first inlet 11 is closer to the extending direction F3 of the flow paths in the first counter-flow portion 10 than the extending direction of a rib close to the fourth edge 1d. That is, the angle formed by the extending direction of the first rib 12a close to the fourth edge 1d and the extending direction F3 of the flow paths in the first counter-flow portion 10 is smaller than the angle formed by the extending direction of the first rib 12a far from the fourth edge 1d and the extending direction F3 of the flow paths in the first counter-flow portion 10. In other words, the extending directions of the plurality of first ribs 12a of the first header portion 12 become closer to the extending direction F3 of the flow paths in the first counter-flow portion 10 with increasing distance from the fourth edge 1d. Consequently, in the first header portion 12, the flow path widths of the plurality of flow paths formed by the plurality of first ribs 12a are larger near the first counter-flow portion 10 than near the first inlet 11.

The extending directions of the four first ribs 12a illustrated in FIG. 5 are represented by angles θ1 to θ4 with respect to the fourth edge 1d. θ1 is the angle of the first rib 12a closest to the fourth edge 1d, θ2 is the angle of the first rib 12a second closest to the fourth edge 1d, θ3 is the angle of the first rib 12a third closest to the fourth edge 1d, and θ4 is the angle of the first rib 12a farthest from the fourth edge 1d. The relationship θ1<θ2<θ3<θ4 is established among the plurality of first ribs 12a.

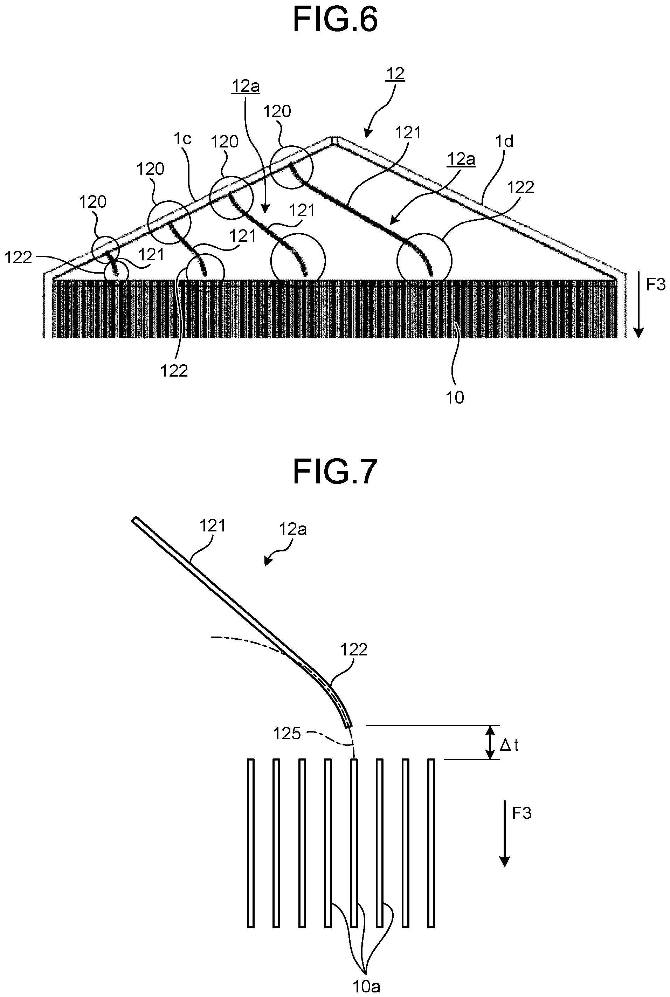

FIG. 6 is a plan view for explaining, in more detail, end shapes and others of the plurality of first ribs 12a of the first header portion 12. Each first rib 12a is composed of an upstream rib 120, a middle rib 121, and a downstream rib 122. The middle rib 121 has a linear shape. The upstream rib 120 has a curved shape that is a single-R shape formed by one arc. The single-R shapes of the upstream ribs 120 of the plurality of first ribs 12a all have the same radius.

Each downstream rib 122 has a curved shape that is a single-R shape formed by one arc. The single-R shapes of the downstream ribs 122 of the plurality of first ribs 12a individually have different radii. The radii of the downstream ribs 122 of the plurality of first ribs 12a increase in curvature with increasing distance from the fourth edge 1d.

When attention is paid to the upstream rib 120 and the downstream rib 122 of one of the first ribs 12a, the curvature of the upstream rib 120 is set to be larger than the curvature of the downstream rib 122.

As described above, the overall shape of the first ribs 12a is almost an S shape including a straight line, in other words, the shape of a letter S elongated lengthwise. The extending directions of the first ribs 12a described above are represented by the extending directions of the middle ribs 121.

The angular differences between the direction of the upstream ends of the upstream ribs 120 and the direction of the downstream ends of the downstream ribs 122 and the extending direction F3 of the flow paths in the first counter-flow portion 10 are smaller than the angular differences between the directions of the middle ribs 121 and the extending direction F3. Specifically, the upstream ends of the upstream ribs 120 are almost perpendicular to the third edge 1c constituting the first inlet 11.

The direction of the downstream end of each downstream rib 122 is at an angle nearly parallel to the extending direction F3 of the flow paths in the first counter-flow portion 10. The relationship between each downstream rib 122 and the flow paths in the first counter-flow portion 10 will be described in more detail with reference to FIG. 7. FIG. 7 is a plan view illustrating a positional relationship between the downstream rib 122 and the flow paths in the first counter-flow portion 10. As illustrated in FIG. 7, the downstream end of the downstream rib 122 does not extend to the first counter-flow portion 10, and faces the upstream edge of the first counter-flow portion 10 across a gap Δt. A virtual extension line 125 of the single-R shape of the downstream rib 122 touches a straight line indicating the extending direction F3 of the flow paths in the first counter-flow portion 10.

The upstream ribs 120 and the downstream ribs 122, which have been illustrated with the examples of the single-R arc shapes, may each have a curved shape that combines arcs having different radii R. The middle ribs 121, which have been illustrated with the example of the linear shape, may each have a slight curve as long as they are almost linear as a whole.

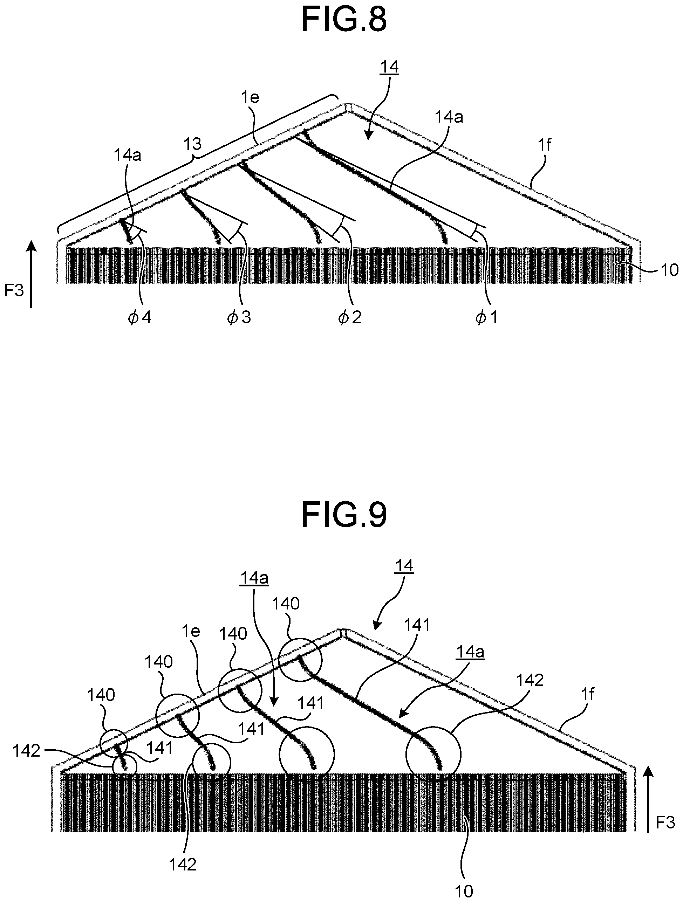

Next, the plurality of second ribs 14a of the second header portion 14 that is an outlet-side header will be described with reference to FIGS. 8 and 9. FIG. 8 is a plan view illustrating an arrangement of the plurality of second ribs 14a of the second header portion 14. The third header portion 24 has the same arrangement. The plurality of second ribs 14a extend in different directions. Of the plurality of second ribs 14a, the extending direction of a rib far from the sixth edge 1f adjacent to the first outlet 13 is closer to the extending direction F3 of the flow paths in the first counter-flow portion 10 than the extending direction of a rib close to the sixth edge 1f. That is, the angle formed by the extending direction of the second rib 14a close to the sixth edge 1f and the extending direction F3 of the flow paths in the first counter-flow portion 10 is smaller than the angle formed by the extending direction of the second rib 14a far from the sixth edge 1f and the extending direction F3 of the flow paths in the first counter-flow portion 10. In other words, the extending directions of the plurality of second ribs 14a of the second header portion 14 become closer to the extending direction F3 of the flow paths in the first counter-flow portion 10 with increasing distance from the sixth edge 1f. Consequently, in the second header portion 14, the flow path widths of the plurality of flow paths formed by the plurality of second ribs 14a are larger near the first counter-flow portion 10 than near the first outlet 13.

The extending directions of the four second ribs 14a illustrated in FIG. 8 are represented by angles ϕ1 to ϕ4 with respect to the sixth edge 1f. ϕ1 is the angle of the second rib 14a closest to the sixth edge 1f, ϕ2 is the angle of the second rib 14a second closest to the sixth edge 1f, ϕ3 is the angle of the second rib 14a third closest to the sixth edge 1f, and ϕ4 is the angle of the second rib 14a farthest from the sixth edge 1f. The relationship ϕ1<ϕ2<ϕ3<ϕ4 is established among the plurality of second ribs 14a.

FIG. 9 is a plan view for explaining, in more detail, end shapes and others of the plurality of second ribs 14a of the second header portion 14. Each second rib 14a is composed of a downstream rib 140, a middle rib 141, and an upstream rib 142. The middle rib 141 has a linear shape. The downstream rib 140 has a curved shape that is a single-R shape formed by one arc. The single-R shapes of the downstream ribs 140 of the plurality of second ribs 14a all have the same radius.

Each upstream rib 142 has a curved shape that is a single-R shape formed by one arc. The single-R shapes of the upstream ribs 142 of the plurality of second ribs 14a individually have different radii. The radii of the upstream ribs 142 of the plurality of second ribs 14a increase in curvature with increasing distance from the sixth edge 1f.

When attention is paid to the downstream rib 140 and the upstream rib 142 of one second rib 14a, the curvature of the downstream rib 140 is set to be larger than the curvature of the upstream rib 142.

Thus, the overall shape of the second ribs 14a is almost an S shape including a straight line, in other words, the shape of a letter S elongated lengthwise. The extending directions of the second ribs 14a described above are represented by the extending directions of the middle ribs 141.

The angular differences between the direction of the downstream ends of the downstream ribs 140 and the direction of the upstream ends of the upstream ribs 142 and the extending direction F3 of the flow paths in the first counter-flow portion 10 are smaller than the angular differences between the directions of the middle ribs 141 and the extending direction F3. Specifically, the downstream ends of the downstream ribs 140 are almost perpendicular to the fifth edge 1e constituting the first outlet 13.

The direction of the upstream end of each upstream rib 142 is at an angle nearly parallel to the extending direction F3 of the flow paths in the first counter-flow portion 10. Like the downstream rib 122 of the first rib 12a illustrated in FIG. 7, the upstream end of each upstream rib 142 does not extend to the first counter-flow portion 10, and faces the downstream edge of the first counter-flow portion 10 across a gap. A virtual extension line of the single-R shape of each upstream rib 142 touches a straight line indicating the extending direction F3 of the flow paths in the first counter-flow portion 10.

The downstream ribs 140 and the upstream ribs 142, which have been illustrated with the examples of the single-R arc shapes, may each have a curved shape that combines arcs having different radii R. The middle ribs 141, which have been illustrated with the example of the linear shape, may each have a slight curve as long as they are almost linear as a whole.

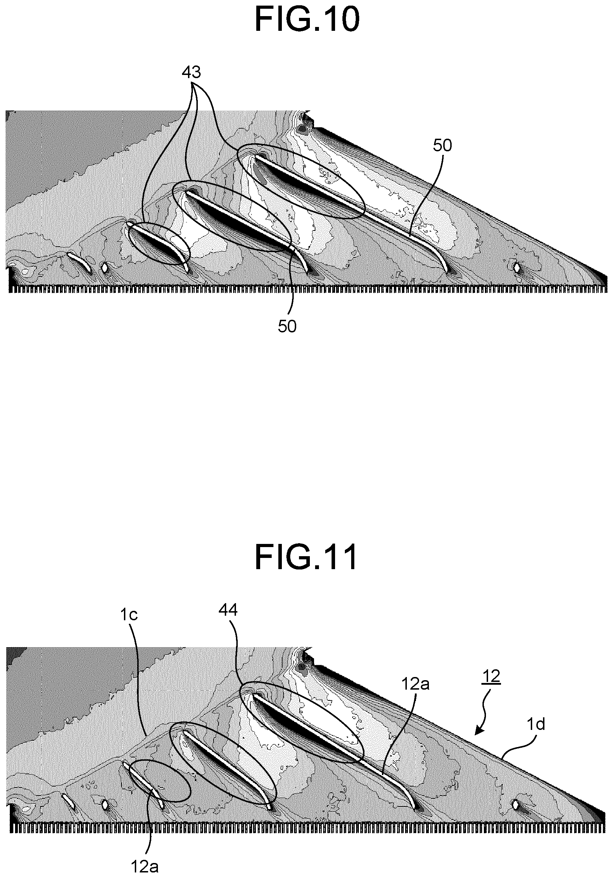

FIG. 10 is a diagram illustrating an air velocity distribution in a header portion with a rib arrangement according to a comparative example. In the comparative example, an air velocity distribution in a portion corresponding to the first header portion 12 is illustrated. A plurality of ribs 50 are arranged in parallel to each other. The flow path widths between the ribs 50 are equal intervals along the entire lengths of the ribs 50. In the comparative example, portions of the ribs 50 corresponding to the upstream ribs are not formed in an arc shape. In the comparative example, flow stagnation 43 occurs at each rib 50, which is a cause of pressure loss.

FIG. 11 is a diagram illustrating an air velocity distribution in the first header portion 12 with the rib arrangement according to the present embodiment. In FIG. 11, in order to confirm the respective effects of the angle and the end shape of each rib, the upstream rib 120 of each first rib 12a is not formed in an arc shape, and the rib angles of the first ribs 12a are set such that the above-described relationship θ1<θ2<θ3<θ4 is established. In the case of FIG. 11, stagnation 44 occurs only at the first rib 12a closest to the fourth edge 1d due to the small rib collision angle of an inflow air current, but stagnation disappears at the other first ribs 12a. Furthermore, by setting θ1<θ2<θ3<θ4, the air velocity distribution in the vicinity of the first counter-flow portion 10 is not affected, and heat-exchange efficiency is not hindered.

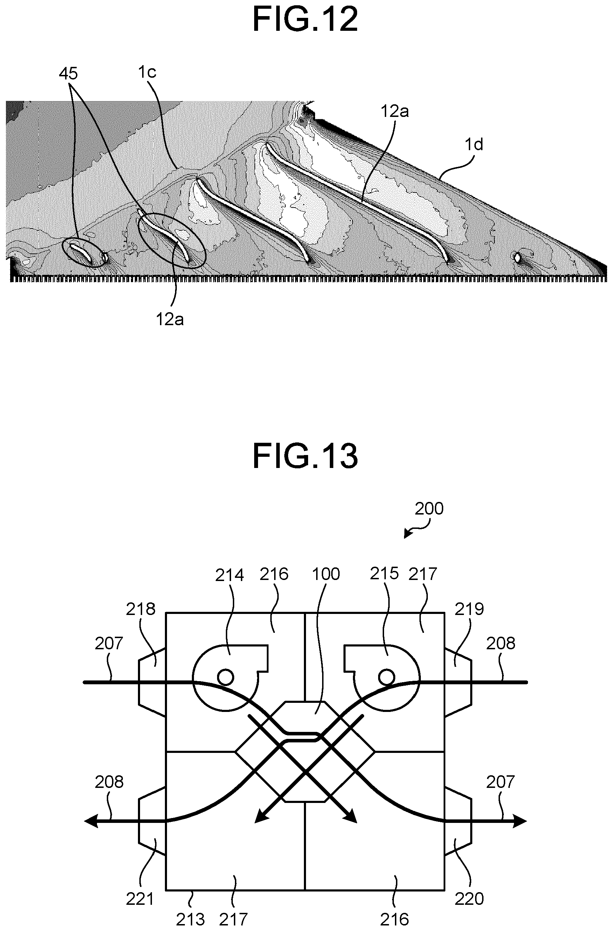

FIG. 12 is a diagram illustrating an air velocity distribution in the first header portion 12 with the rib arrangement according to the present embodiment. In FIG. 12, in order to confirm the respective effects of the angle and the end shape of each rib, the first ribs 12a are made the same in rib angle as in the comparative example, and the upstream rib 120 of each first rib 12a is formed in an arc shape. In the case of FIG. 12, air flows along the ribs at all the first ribs 12a, and stagnation disappears. However, at the two first ribs 12a far from the fourth edge 1d, stagnation 45 occurs in flow, compared to the distribution around the ribs at the same places in FIG. 11. The stagnation 45 can be eliminated by setting the rib angles to θ1<θ2<θ3<θ4 as illustrated in FIG. 11.

Thus, according to the embodiment, the plurality of ribs on each header portion are formed to establish the relationship θ1<θ2<θ3<θ4 or the relationship ϕ1<ϕ2<ϕ3<ϕ4. Consequently, in the header portion, the flow path widths of the plurality of flow paths formed by the plurality of ribs are larger near the counter-flow portion than near the inlet. This can reduce pressure loss in the header portion and allows air currents to uniformly flow into the counter-flow portion.

In this embodiment, the upstream ribs of the inlet-side header are formed in an arc shape so that the upstream ends of the upstream ribs are perpendicular to the edge constituting the inlet. Consequently, the inflow direction of an air current at the inlet agrees with the direction of the upstream ribs of the inlet-side header, reducing pressure loss at the inlet. The downstream ribs of the outlet-side header are formed in an arc shape so that the downstream ends of the downstream ribs are perpendicular to the edge constituting the outlet. Consequently, the outflow direction of an air current at the outlet agrees with the direction of the downstream ribs of the outlet-side header, reducing pressure loss at the outlet.

In this embodiment, the extending directions of the upstream ribs are made closer to the extending direction of the flow paths in the counter-flow portion than the extending directions of the middle ribs, and the extending directions of the downstream ribs are made closer to the extending direction of the flow paths in the counter-flow portion than the extending directions of the middle ribs. This can reduce pressure loss in the header portions.

In this embodiment, the downstream end of the downstream rib 122 of each first rib 12a faces the upstream edge of the first counter-flow portion 10 across the gap Δt, the downstream rib 122 of each first rib 12a has an arc shape, the virtual extension line 125 of the downstream rib 122 of each first rib 12a touches the extending direction F3 of the flow paths in the first counter-flow portion 10, the upstream end of the upstream rib 142 of each second rib 14a faces the downstream edge of the first counter-flow portion 10 across the gap, the upstream rib 142 of each second rib 14a has an arc shape, and the virtual extension line of the upstream rib 142 of each second rib 14a touches the extending direction F3 of the flow paths in the first counter-flow portion 10. This can reduce pressure loss in flows from the first ribs 12a to the first counter-flow portion 10 and flows from the first counter-flow portion 10 to the second ribs 14a.

The downstream ribs 122 of the plurality of first ribs 12a of the first header portion 12 have arc shapes of different radii and increase in curvature with increasing distance from the fourth edge 1d, and the upstream ribs 142 of the plurality of second ribs 14a of the second header portion 14 have arc shapes of different radii and increase in curvature with increasing distance from the sixth edge 1f. This achieves uniform flows from the first ribs 12a to the first counter-flow portion 10 and achieves uniform flows from the first counter-flow portion 10 to the second ribs 14a.

When the heat-exchange element 100 in FIG. 1 is viewed as a plan view, in the heat-exchange element 100 in FIG. 1, the first partition plates 1 form the first flow paths from the lower left to the upper right, and the second partition plates 2 form the second flow paths from the lower right to the upper left. In another embodiment, the first partition plates 1 may form the first flow paths from the upper left to the lower right, and the second partition plates 2 may form the second flow paths from the upper right to the lower left, or the first partition plates 1 may form the first flow paths from the lower right to the upper left, and the second partition plates 2 may form the second flow paths from the lower left to the upper right, or the first partition plates 1 may form the first flow paths from the upper right to the lower left, and the second partition plates 2 may form the second flow paths from the upper left to the lower right.

Next, a heat-exchange ventilation apparatus 200 including the heat-exchange element 100 will be described. FIG. 13 is a conceptual diagram illustrating the heat-exchange ventilation apparatus 200 in which the heat-exchange element 100 is installed.

The heat-exchange ventilation apparatus 200 includes an air supply fan 214, an air exhaust fan 215, the heat-exchange element 100, and a casing 213.

The casing 213 is a box-shaped member that houses the air supply fan 214, the air exhaust fan 215, and the heat-exchange element 100. A supply air passage 216 through which a first air current 207 passes and an exhaust air passage 217 through which a second air current 208 passes are provided in the casing 213. The first air current 207 is a supply air current from the outside to the inside of a room. The second air current 208 is an exhaust air current from the inside to the outside of the room. A supply air outlet 220 and an exhaust air inlet 219 are provided in an interior-side side surface of the casing 213. A supply air inlet 218 and an exhaust air outlet 221 are provided in an exterior-side side surface of the casing 213.

The air supply fan 214 is disposed in the supply air passage 216. The air supply fan 214 takes outside air from the supply air inlet 218 into the supply air passage 216, generating the first air current 207. The first air current 207 flows through the supply air passage 216 and is blown into the room from the supply air outlet 220. The air supply fan 214 generates the first air current 207 from the outside to the inside of the room.

The air exhaust fan 215 is disposed in the exhaust air passage 217. The air exhaust fan 215 takes inside air from the exhaust air inlet 219 into the exhaust air passage 217, generating the second air current 208. The second air current 208 flows through the exhaust air passage 217 and is blown to the outside of the room from the exhaust air outlet 221. The air exhaust fan 215 generates the second air current 208 from the inside to the outside of the room.

The heat-exchange element 100 is provided at the position of the intersection of the supply air passage 216 and the exhaust air passage 217. The heat-exchange element 100 performs total heat exchange between the first air current 207 flowing through the supply air passage 216 and the second air current 208 flowing through the exhaust air passage 217. The heat-exchange ventilation apparatus 200 recovers sensible heat and latent heat of an exhaust air current from inside the room by total heat exchange in the heat-exchange element 100, and transfers the recovered sensible heat and latent heat to a supply air current. Further, the heat-exchange ventilation apparatus 200 recovers sensible heat and latent heat of a supply air current from outside the room by total heat exchange in the heat-exchange element 100, and transfers the recovered sensible heat and latent heat to an exhaust air current. The heat-exchange ventilation apparatus 200 can improve cooling and heating efficiency and dehumidification and humidification efficiency in the room, reducing energy used for air conditioning in the room. The heat-exchange element 100 may be configured to transfer only sensible heat between an exhaust air current and a supply air current.

The configuration described in the above embodiment illustrates an example of the subject matter of the present disclosure, and can be combined with another known art, and can be partly omitted or changed without departing from the scope of the present disclosure.

### Reference Signs List

1 first partition plate; 1a first edge; 1b second edge; 1c third edge; 1d fourth edge; 1e fifth edge; 1f sixth edge; 2 second partition plate; 2a seventh edge; 2b eighth edge; 2c ninth edge; 2d tenth edge; 2e eleventh edge; 2f twelfth edge; 10 first counter-flow portion; 11 first inlet; 12 first header portion; 12a first rib; 13 first outlet; 14 second header portion; 14a second rib; 20 second counter-flow portion; 21 second inlet; 22 fourth header portion; 22a fourth rib; 23 second outlet; 24 third header portion; 24a third rib; 100 heat-exchange element; 120, 142 upstream rib; 121, 141 middle rib; 122, 140 downstream rib; 200 heat-exchange ventilation apparatus. sensible heat between an exhaust air current and a supply air current.

The configuration described in the above embodiment illustrates an example of the subject matter of the present disclosure, however, the scope of protection is ultimately defined by the claims.

### Reference Signs List

1 first partition plate; 1a first edge; 1b second edge; 1c third edge; 1d fourth edge; 1e fifth edge; 1f sixth edge; 2 second partition plate; 2a seventh edge; 2b eighth edge; 2c ninth edge; 2d tenth edge; 2e eleventh edge; 2f twelfth edge; 10 first counter-flow portion; 11 first inlet; 12 first header portion; 12a first rib; 13 first outlet; 14 second header portion; 14a second rib; 20 second counter-flow portion; 21 second inlet; 22 fourth header portion; 22a fourth rib; 23 second outlet; 24 third header portion; 24a third rib; 100 heat-exchange element; 120, 142 upstream rib; 121, 141 middle rib; 122, 140 downstream rib; 200 heat-exchange ventilation apparatus.

## Claims

1. A heat-exchange element (100) comprising hexagonal first partition plates (1) and hexagonal second partition plates (2) stacked alternately, a plurality of first flow paths (F1-F5) that are each formed between a front surface of one of the first partition plates (1) and a back surface of an adjacent one of the second partition plates (2) and through each of which air flows from a first inlet (11) to a first outlet (13), and a plurality of second flow paths (G1-G5) that are each formed between a back surface of one of the first partition plates (1) and a front surface of an adjacent one of the second partition plates (2) and through each of which air flows from a second inlet (21) to a second outlet (23), wherein
each of the first partition plates (1) includes
a first counter-flow portion (10) disposed in a region sandwiched between a first edge (1a) and a second edge (1b) that are opposite edges of a hexagon, the first counter-flow portion (10) including a plurality of third flow paths extending in parallel to the first edge (1a) and the second edge (1b),
a first header portion (12) disposed in a region enclosed by a third edge (1c) and a fourth edge (1d) of the hexagon disposed on one side of the first edge (1a) and the second edge (1b) and the first counter-flow portion (10), the first header portion (12) including a plurality of first ribs (12a) extending from the third edge (1c) that is an edge adjacent to the first edge (1a), of the third edge (1c) and the fourth edge (1d), along the fourth edge (1d) toward the first counter-flow portion (10), and
a second header portion (14) disposed in a region enclosed by a fifth edge (1e) and a sixth edge (1f) of the hexagon disposed on an opposite side of the first edge (1a) and the second edge (1b) and the first counter-flow portion (10), the second header portion (14) including a plurality of second ribs (14a) extending from the fifth edge (1e) that is an edge adjacent to the second edge (1b), of the fifth edge (1e) and the sixth edge (1f), along the sixth edge (1f) toward the first counter-flow portion (10),
each of the second partition plates (2) includes
a second counter-flow portion (20) disposed in a region sandwiched between a seventh edge (2a) and an eighth edge (2b) that are opposite edges of a hexagon, the second counter-flow portion (20) including a plurality of fourth flow paths extending in parallel to the seventh edge (2a) and the eighth edge (2b),
a third header portion (24) disposed in a region enclosed by a ninth edge (2c) and a tenth edge (2d) of the hexagon disposed on one side of the seventh edge (2a) and the eighth edge (2b) and the second counter-flow portion (20), the third header portion (24) including a plurality of third ribs (24a) extending from the tenth edge (2d) that is an edge adjacent to the eighth edge (2b), of the ninth edge (2c) and the tenth edge (2d), along the ninth edge (2c) toward the second counter-flow portion (20), and
a fourth header portion (22) disposed in a region enclosed by an eleventh edge (2e) and a twelfth edge (2f) of the hexagon disposed on an opposite side of the seventh edge (2a) and the eighth edge (2b) and the second counter-flow portion (20), the fourth header portion (22) including a plurality of fourth ribs (22a) extending from the twelfth edge (2f) that is an edge adjacent to the seventh edge (2a), of the eleventh edge (2e) and the twelfth edge (2f), along the eleventh edge (2e) toward the second counter-flow portion (20),
the first partition plates (1) and the second partition plates (2) are stacked alternately such that the first edge (1a) is placed on the seventh edge (2a), and the third edge (1c) is placed on the ninth edge (2c), the first inlet (11) is a space between the third edge (1c) and the ninth edge (2c), the first outlet (13) is a space between the fifth edge (1e) and the eleventh edge (2e), the second inlet (21) is a space between the twelfth edge (2f) and the sixth edge (1f), the second outlet (23) is a space between the tenth edge (2d) and the fourth edge (1d), the first flow paths (F1-F5) are formed by the first ribs (12a), the third flow paths, and the second ribs (14a), and the second flow paths (G1-G5) are formed by the fourth ribs (22a), the fourth flow paths, and the third ribs (24a),
an extending direction of a fifth rib that is one of the plurality of first ribs (12a) of the first header portion (12) is closer to an extending direction (F3) of the third flow paths than an extending direction of a sixth rib that is a rib of the plurality of first ribs (12a) closer to the fourth edge (1d) than the fifth rib,
an extending direction of a seventh rib that is one of the plurality of second ribs (14a) of the second header portion (14) is closer to the extending direction (F3) of the third flow paths than an extending direction of an eighth rib that is a rib of the plurality of second ribs (14a) closer to the sixth edge (1f) than the seventh rib,
an extending direction of a ninth rib that is one of the plurality of third ribs (24a) of the third header portion (24) is closer to an extending direction of the fourth flow paths than an extending direction of a tenth rib that is a rib of the plurality of third ribs (24a) closer to the ninth edge (2c) than the ninth rib,
an extending direction of an eleventh rib that is one of the plurality of fourth ribs (22a) of the fourth header portion (22) is closer to the extending direction of the fourth flow paths than an extending direction of a twelfth rib that is a rib of the plurality of fourth ribs (22a) closer to the eleventh edge (2e) than the eleventh rib,
each of the first ribs (12a), the second ribs (14a), the third ribs (24a), and the fourth ribs (22a) includes a middle rib (121, 141), an upstream rib (120, 142) disposed upstream of the middle rib (121, 141), and a downstream rib (122, 140) disposed downstream of the middle rib (121, 141), the middle rib (121, 141) has a linear shape, and the upstream rib (120, 142) and the downstream rib (122, 140) have a curved shape, **characterized in that**
a downstream end of the downstream rib (122) of each of the first ribs (12a) faces an upstream edge of the first counter-flow portion (10) across a gap (Δt), the downstream rib (122) of each of the first ribs (12a) has an arc shape, and a virtual extension line (125) of the downstream rib (122) of each of the first ribs (12a) touches a straight line indicating the extending direction (F3) of the third flow paths,
an upstream end of the upstream rib (142) of each of the second ribs (14a) faces a downstream edge of the first counter-flow portion (10) across a gap, the upstream rib (142) of each of the second ribs (14a) has an arc shape, and a virtual extension line of the upstream rib (142) of each of the second ribs (14a) touches a straight line indicating the extending direction (F3) of the third flow paths,
an upstream end of the upstream rib of each of the third ribs (24a) faces a downstream edge of the second counter-flow portion (20) across a gap, the upstream rib of each of the third ribs (24a) has an arc shape, and a virtual extension line of the upstream rib of each of the third ribs (24a) touches a straight line indicating the extending direction of the fourth flow paths, and
a downstream end of the downstream rib of each of the fourth ribs (22a) faces an upstream edge of the second counter-flow portion (20) across a gap, the downstream rib of each of the fourth ribs (22a) has an arc shape, and a virtual extension line of the downstream rib of each of the fourth ribs (22a) touches a straight line indicating the extending direction of the fourth flow paths.

2. The heat-exchange element (100) according to claim 1, wherein
extending directions of the plurality of first ribs (12a) of the first header portion (12) become closer to the extending direction (F3) of the third flow paths with increasing distance from the fourth edge (1d),
extending directions of the plurality of second ribs (14a) of the second header portion (14) become closer to the extending direction (F3) of the third flow paths with increasing distance from the sixth edge (1f),
extending directions of the plurality of third ribs (24a) of the third header portion (24) become closer to the extending direction of the fourth flow paths with increasing distance from the ninth edge (2c), and
extending directions of the plurality of fourth ribs (22a) of the fourth header portion (22) become closer to the extending direction of the fourth flow paths with increasing distance from the eleventh edge (2e).

3. The heat-exchange element (100) according to claim 1 or 2, wherein
an extending direction of the upstream rib (120, 142) is closer to the extending direction (F3) of the third flow paths than an extending direction of the middle rib (121, 141), and
an extending direction of the downstream rib (122, 140) is closer to the extending direction (F3) of the third flow paths than the extending direction of the middle rib (121, 141).

4. The heat-exchange element (100) according to claim 3, wherein
the first ribs (12a), the second ribs (14a), the third ribs (24a), and the fourth ribs (22a) have an S shape including a straight line or an inverted S shape including a straight line.

5. The heat-exchange element (100) according to any one of claims 1 to 4, wherein
an upstream end of the upstream rib (120) of each of the first ribs (12a) is perpendicular to the third edge (1c),
a downstream end of the downstream rib (140) of each of the second ribs (14a) is perpendicular to the fifth edge (1e),
a downstream end of the downstream rib of each of the third ribs (24a) is perpendicular to the tenth edge (2d), and
an upstream end of the upstream rib of each of the fourth ribs (22a) is perpendicular to the twelfth edge (2f).

6. The heat-exchange element (100) according to any one of claims 1 to 5, wherein
a curvature of the upstream rib (120) of the first rib (12a) is larger than a curvature of the downstream rib (122) of the first rib (12a),
a curvature of the upstream rib of the fourth rib (22a) is larger than a curvature of the downstream rib of the fourth rib (22a),
a curvature of the downstream rib (140) of the second rib (14a) is larger than a curvature of the upstream rib (142) of the second rib (14a), and
a curvature of the downstream rib of the third rib (24a) is larger than a curvature of the upstream rib of the third rib (24a).

7. The heat-exchange element (100) according to any one of claims 1 to 6, wherein
the upstream ribs (120) of the plurality of first ribs (12a) of the first header portion (12) have arc shapes of the same radius,
the downstream ribs (122) of the plurality of first ribs (12a) of the first header portion (12) have arc shapes of different radii and increase in curvature with increasing distance from the fourth edge (1d),
the downstream ribs (140) of the plurality of second ribs (14a) of the second header portion (14) have arc shapes of the same radius, and
the upstream ribs (142) of the plurality of second ribs (14a) of the second header portion (14) have arc shapes of different radii and increase in curvature with increasing distance from the sixth edge (1f).

8. The heat-exchange element (100) according to any one of claims 1 to 7, wherein
the downstream ribs of the plurality of third ribs (24a) of the third header portion (24) have arc shapes of the same radius,
the upstream ribs of the plurality of third ribs (24a) of the third header portion (24) have arc shapes of different radii and increase in curvature with increasing distance from the ninth edge (2c),
the upstream ribs of the plurality of fourth ribs (22a) of the fourth header portion (22) have arc shapes of the same radius, and
the downstream ribs of the plurality of fourth ribs (22a) of the fourth header portion (22) have arc shapes of different radii and increase in curvature with increasing distance from the eleventh edge (2e).

9. A heat-exchange ventilation apparatus (200) in which the heat-exchange element (100) according to any one of claims 1 to 8 is installed.

## Patentansprüche

1. Wärmetauscherelement (100), das hexagonale erste Trennplatten (1) und hexagonale zweite Trennplatten (2), die alternierend gestapelt sind, eine Vielzahl von ersten Strömungspfaden (F1-F5), die jeweils zwischen einer Vorderseite von einer der ersten Trennplatten (1) und einer Rückseite einer benachbarten der zweiten Trennplatten (2) gebildet ist und durch jeden von denen Luft von einem ersten Einlass (11) zu einem ersten Auslass (13) strömt, und eine Vielzahl von zweiten Strömungspfaden (G1-G5) aufweist, die jeweils ausgebildet sind, zwischen einer Rückseite von einer der ersten Trennplatten (1) und einer Vorderseite einer benachbarten der zweiten Trennplatten (2) und durch jede von denen Luft von einem zweiten Einlass (21) zu einem zweiten Auslass (23) strömt, wobei
jede der ersten Trennplatten (1) umfasst
einen ersten Gegenströmungsabschnitt (10), der in einem Bereich angeordnet ist, der zwischen einem ersten Rand (1a) und einem zweiten Rand (1b), die gegenüberliegende Ränder eines Hexagons sind, angeordnet ist, wobei der erste Gegenströmungsabschnitt (10) eine Vielzahl von dritten Strömungspfaden umfasst, die sich parallel zum ersten Rand (1a) und zum zweiten Rand (1b) erstrecken,
einen ersten Kopfabschnitt (12), der in einem Bereich angeordnet ist, der von einem dritten Rand (1c) und einem vierten Rand (1d) des Hexagons umgeben ist, die auf einer Seite des ersten Rands (1a) und des zweiten Rands (1b) und des ersten Gegenströmungsabschnitts (10) angeordnet sind, wobei der erste Kopfabschnitt (12) eine Vielzahl von ersten Rippen (12a), die sich von dem dritten Rand (1c), der ein Rand benachbart zum ersten Rand (1a) ist, aus erstrecken, des dritten Rands (1c) und des vierten Rands (1d) entlang des vierten Rands (1d) in Richtung des ersten Gegenströmungsabschnitts (10) umfasst, und
einen zweiten Kopfabschnitt (14), der in einem Bereich angeordnet ist, der von einem fünften Rand (1e) und einem sechsten Rand (1f) des Hexagons umgeben ist, die auf einer gegenüberliegenden Seite zum ersten Rand (1a) und zum zweiten Rand (1b) und zum ersten Gegenströmungsabschnitts (10) angeordnet sind, wobei der zweite Kopfabschnitt (14) eine Vielzahl von zweiten Rippen (14a), die sich von dem fünften Rand (1e), der ein Rand benachbart zum zweiten Rand (1b) ist, aus erstrecken, des fünften Rands (1e) und des sechsten Rands (1f) entlang des sechsten Rands (1f) in Richtung des ersten Gegenströmungsabschnitts (10) umfasst,
jede der zweiten Trennplatten (2) umfasst
einen zweiten Gegenströmungsabschnitt (20), der in einem Bereich angeordnet ist, der zwischen einem siebten Rand (2a) und einem achten Rand (2b), die gegenüberliegende Ränder eines Hexagons sind, angeordnet ist, wobei der zweite Gegenströmungsabschnitt (20) eine Vielzahl von vierten Strömungspfaden umfasst, die sich parallel zum siebten Rand (2a) und zum achten Rand (2b) erstrecken,
einen dritten Kopfabschnitt (24), der in einem Bereich angeordnet ist, der von einen neunten Rand (2c) und einen zehnten Rand (2d) des Hexagons umgeben ist, die auf einer Seite des siebten Rands (2a) und des achten Rands (2b) und des zweiten Gegenströmungsabschnitts (20) angeordnet sind, wobei der dritte Kopfabschnitt (24) eine Vielzahl von dritten Rippen (24a), die sich von dem zehnten Rand (2d), der ein Rand benachbart zum achten Rand (2b) ist, aus erstrecken, des neunten Rands (2c) und des zehnten Rands (2d) entlang des neunten Rands (2c) in Richtung des zweiten Gegenströmungsabschnitts (20) umfassen, und
einen vierten Kopfabschnitt (22), der in einem Bereich angeordnet ist, der von einen elften Rand (2e) und einen zwölften Rand (2f) des Hexagons umgeben ist, die auf einer gegenüberliegenden Seite des siebten Rands (2a) und des achten Rands (2b) und des zweiten Gegenströmungsabschnitts (20) angeordnet sind, wobei der vierte Kopfabschnitt (22) eine Vielzahl von vierten Rippen (22a), die sich von dem zwölften Rand (2f), der ein Rand benachbart zum siebten Rand (2a) ist, aus erstrecken, des elften Rands (2e) und des zwölften Rands (2f) entlang des elften Rands (2e) in Richtung des zweiten Gegenströmungsabschnitts (20) umfasst,
die ersten Trennplatten (1) und die zweiten Trennplatten (2) alternierend derart gestapelt sind, dass der erste Rand (1a) auf dem siebten Rand (2a) platziert ist und dass der dritte Rand (1c) auf dem neunten Rand (2c) platziert ist, wobei der erste Einlass (11) ein Raum zwischen dem dritten Rand (1c) und dem neunten Rand (2c) ist, wobei der erste Auslass (13) ein Raum zwischen dem fünften Rand (1e) und dem elften Rand (2e) ist, wobei der zweite Einlass (21) ein Raum zwischen dem zwölften Rand (2f) und dem sechsten Rand (1f) ist, wobei der zweite Auslass (23) ein Raum zwischen dem zehnten Rand (2d) und dem vierten Rand (1d) ist, wobei die ersten Strömungspfade (F1-F5) durch die ersten Rippen (12a), die dritten Strömungspfade und die zweiten Rippen (14a) gebildet sind, und wobei die zweiten Strömungspfade (G1-G5) durch die vierten Rippen (22a), die vierten Strömungspfade und die dritten Rippen (24a) gebildet sind,
eine Erstreckungsrichtung einer fünften Rippe, die eine aus der Vielzahl von ersten Rippen (12a) des ersten Kopfabschnitts (12) ist, näher zu einer Erstreckungsrichtung (F3) der dritten Strömungspfade als eine Erstreckungsrichtung einer sechsten Rippe ist, die eine Rippe aus der Vielzahl von ersten Rippen (12a) ist, die näher zum vierten Rand (1d) als zur fünften Rippe ist,
eine Erstreckungsrichtung einer siebten Rippe, die eine aus der Vielzahl von zweiten Rippen (14a) des zweiten Kopfabschnitts (14) ist, näher zur Erstreckungsrichtung (F3) der dritten Strömungspfade als eine Erstreckungsrichtung einer achten Rippe ist, die eine Rippe aus der Vielzahl von zweiten Rippen (14a) ist, die näher zum sechsten Rand (1f) als die siebte Rippe ist,
eine Erstreckungsrichtung einer neunten Rippe, die eine aus der Vielzahl von dritten Rippen (24a) des dritten Kopfabschnitts (24) ist, näher zu einer Erstreckungsrichtung der vierten Strömungspfade als eine Erstreckungsrichtung einer zehnten Rippe ist, die eine Rippe aus der Vielzahl von dritten Rippen (24a) ist, die näher zu dem neunten Rand (2c) als zur neunten Rippe sind, und
eine Erstreckungsrichtung einer elften Rippe, die eine aus der Vielzahl von vierten Rippen (22a) des vierten Kopfabschnitts (22) ist, näher zu der Erstreckungsrichtung der vierten Strömungspfade als eine Erstreckungsrichtung einer zwölften Rippe ist, die eine Rippe aus der Vielzahl von vierten Rippen (22a) ist, die näher zu dem elften Rand (2e) als zur elften Rippe sind,
wobei die ersten Rippen (12a), die zweiten Rippen (14a), die dritten Rippen (24a) und die vierten Rippen (22a) eine mittlere Rippe (121, 141), eine stromaufwärtige Rippe (120, 142), die stromaufwärts zur mittleren Rippe (121, 141) angeordnet ist, und eine stromabwärtige Rippe (122, 140) umfasst, die stromabwärts zur mittleren Rippe (121, 141) angeordnet ist, wobei die mittlere Rippe (121, 141) eine lineare Form aufweist und wobei die stromaufwärtige Rippe (120, 142) und die stromabwärtige Rippe (122, 140) eine gekrümmte Form aufweisen, **dadurch gekennzeichnet, dass**
ein stromabwärtiges Ende der stromabwärtigen Rippe (122) von jeder der ersten Rippen (12a) einem stromaufwärtigen Rand des ersten Gegenströmungsabschnitts (10) über einen Spalt (Δt) zugewandt ist, wobei die stromabwärtige Rippe (122) von jeder der ersten Rippen (12a) eine Bogenform aufweist, und wobei eine virtuelle Verlängerungslinie (125) der stromabwärtigen Rippe (122) von jeder der ersten Rippen (12a) eine gerade Linie berührt, die die Erstreckungsrichtung (F3) der dritten Strömungspfade angibt,
ein stromaufwärtiges Ende der stromaufwärtigen Rippe (142) von jeder der zweiten Rippen (14a) einem stromabwärtigen Rand des ersten Gegenströmungsabschnitts (10) über einen Spalt zugewandt ist, wobei die stromaufwärtige Rippe (142) von jeder der zweiten Rippen (14a) eine Bogenform aufweist, und wobei eine virtuelle Verlängerungslinie der stromaufwärtigen Rippe (142) von jeder der zweiten Rippen (14a) eine gerade Linie berührt, die die Erstreckungsrichtung (F3) der dritten Strömungspfade angibt,
ein stromaufwärtiges Ende der stromaufwärtigen Rippe von jeder der dritten Rippen (24a) einem stromabwärtigen Rand des zweiten Gegenströmungsabschnitts (20) über einen Spalt zugewandt ist, wobei die stromaufwärtige Rippe von jeder der dritten Rippen (24a) eine Bogenform aufweist, und wobei eine virtuelle Verlängerungslinie der stromaufwärtigen Rippe von jeder der dritten Rippen (24a) eine gerade Linie berührt, die die Erstreckungsrichtung der vierten Strömungspfade angibt, und
ein stromabwärtiges Ende der stromabwärtigen Rippe von jeder der vierten Rippen (22a) einem stromaufwärtigen Rand des zweiten Gegenströmungsabschnitts (20) über einen Spalt zugewandt ist, wobei die stromabwärtige Rippe von jeder der vierten Rippen (22a) eine Bogenform aufweist, und wobei eine virtuelle Verlängerungslinie der stromabwärtigen Rippe von jeder der vierten Rippen (22a) eine gerade Linie berührt, die die Erstreckungsrichtung der vierten Strömungspfade angibt.

2. Wärmetauscherelement (100) nach Anspruch 1, wobei
Erstreckungsrichtungen der Vielzahl von ersten Rippen (12a) des ersten Kopfabschnitts (12) näher zu der Erstreckungsrichtung (F3) der dritten Strömungspfade mit zunehmender Entfernung gegenüber dem vierten Rand (1d) werden,
Erstreckungsrichtungen der Vielzahl von zweiten Rippen (14a) des zweiten Kopfabschnitts (14) näher zu der Erstreckungsrichtung (F3) der dritten Strömungspfade mit zunehmender Entfernung gegenüber dem sechsten Rand (1f) werden,
Erstreckungsrichtungen der Vielzahl von dritten Rippen (24a) des dritten Kopfabschnitts (24) näher zu der Erstreckungsrichtung der vierten Strömungspfade mit zunehmender Entfernung gegenüber dem neunten Rand (2c) werden, und
Erstreckungsrichtungen der Vielzahl von vierten Rippen (22a) des vierten Kopfabschnitts (22) näher zu der Erstreckungsrichtung der vierten Strömungspfade mit zunehmender Entfernung gegenüber dem elften Rand (2e) werden.

3. Wärmetauscherelement (100) gemäß Anspruch 1 oder 2, wobei
eine Erstreckungsrichtung der stromaufwärtigen Rippe (120, 142) näher zu der Erstreckungsrichtung (F3) der dritten Strömungspfade als eine Erstreckungsrichtung der mittleren Rippe (121, 141) ist, und
eine Erstreckungsrichtung der stromabwärtigen Rippe (122, 140) näher zu der Erstreckungsrichtung (F3) der dritten Strömungspfade als die Erstreckungsrichtung der mittleren Rippe (121, 141) ist.

4. Wärmetauscherelement (100) nach Anspruch 3, wobei
die ersten Rippen (12a), die zweiten Rippen (14a), die dritten Rippen (24a) und die vierten Rippen (22a) eine S-Form aufweisen, die eine gerade Linie oder eine umgekehrte S-Form einschließlich einer geraden Linie umfasst.

5. Wärmetauscherelement (100) gemäß einem der Ansprüche 1 bis 4, wobei
ein stromaufwärtiges Ende der stromaufwärtigen Rippe (120) von jeder der ersten Rippen (12a) senkrecht zum dritten Rand (1c) ist,
ein stromabwärtiges Ende der stromabwärtigen Rippe (140) von jeder der zweiten Rippen (14a) senkrecht zum fünften Rand (1e) ist,
ein stromabwärtiges Ende der stromabwärtigen Rippe von jeder der dritten Rippen (24a) senkrecht zu dem zehnten Rand (2d) ist, und
ein stromaufwärtiges Ende der stromaufwärtigen Rippe von jeder der vierten Rippen (22a) senkrecht zum zwölften Rand (2f) ist.

6. Wärmetauscherelement (100) gemäß einem der Ansprüche 1 bis 5, wobei
eine Krümmung der stromaufwärtigen Rippe (120) der ersten Rippe (12a) größer als eine Krümmung der stromabwärtigen Rippe (122) der ersten Rippe (12a) ist,
eine Krümmung der stromaufwärtigen Rippe der vierten Rippe (22a) größer als eine Krümmung der stromabwärtigen Rippe der vierten Rippe (22a) ist,
eine Krümmung der stromabwärtigen Rippe (140) der zweiten Rippe (14a) größer als eine Krümmung der stromaufwärtigen Rippe (142) der zweiten Rippe (14a) ist, und
eine Krümmung der stromabwärtigen Rippe der dritten Rippe (24a) größer als eine Krümmung der stromaufwärtigen Rippe der dritten Rippe (24a) ist.

7. Wärmetauscherelement (100) gemäß einem der Ansprüche 1 bis 6, wobei
die stromaufwärtigen Rippen (120) der Vielzahl von ersten Rippen (12a) des ersten Kopfabschnitts (12) Bogenformen des gleichen Radius aufweisen,
die stromabwärtigen Rippen (122) der Vielzahl von ersten Rippen (12a) des ersten Kopfabschnitts (12) Bogenformen mit unterschiedlichen Radien aufweisen und deren Krümmung mit zunehmender Entfernung gegenüber dem vierten Rand (1d) zunimmt,
die stromabwärtigen Rippen (140) der Vielzahl von zweiten Rippen (14a) des zweiten Kopfabschnitts (14) Bogenformen des gleichen Radius aufweisen, und
die stromaufwärtigen Rippen (142) der Vielzahl von zweiten Rippen (14a) des zweiten Kopfabschnitts (14) Bogenformen mit unterschiedlichen Radien aufweisen und deren Krümmung mit zunehmender Entfernung gegenüber dem sechsten Rand (1f) zunimmt.

8. Wärmetauscherelement (100) gemäß einem der Ansprüche 1 bis 7, wobei
die stromabwärtigen Rippen der Vielzahl von dritten Rippen (24a) des dritten Kopfabschnitts (24) Bogenformen mit dem gleichen Radius aufweisen,
die stromaufwärtigen Rippen der Vielzahl von dritten Rippen (24a) des dritten Kopfabschnitts (24) Bogenformen mit unterschiedlichen Radien aufweisen und deren Krümmung mit zunehmender Entfernung gegenüber dem neunten Rand (2c) zunimmt,
die stromaufwärtigen Rippen der Vielzahl von vierten Rippen (22a) des vierten Kopfabschnitts (22) Bogenformen mit dem gleichen Radius aufweisen, und
die stromabwärtigen Rippen der Vielzahl von vierten Rippen (22a) des vierten Kopfabschnitts (22) Bogenformen mit unterschiedlichen Radien aufweisen und deren Krümmung mit zunehmender Entfernung gegenüber dem elften Rand (2e) zunimmt.

9. Wärmetauscherbelüftungsvorrichtung (200), in der das Wärmetauscherelement (100) gemäß einem der Ansprüche 1 bis 8 installiert ist.

## Revendications

1. Élément d'échange thermique (100) comprenant des premières plaques de séparation hexagonales (1) et des secondes plaques de séparation hexagonales (2) empilées en alternance, une pluralité de premières voies d'écoulement (FI à F5) qui sont chacune formées entre une surface avant de l'une des premières plaques de séparation (1) et une surface arrière de l'une adjacente des secondes plaques de séparation (2) et à travers chacune desquelles l'air circule d'une première entrée (11) à une première sortie (13), et une pluralité de deuxièmes voies d'écoulement (G1 à G5) qui sont chacune formées entre une surface arrière de l'une des premières plaques de séparation (1) et une surface avant de l'une adjacente des secondes plaques de séparation (2) et à travers chacun desquelles l'air s'écoule d'une seconde entrée (21) à une seconde sortie (23), dans lequel
chacune des premières plaques de séparation (1) comporte
une première partie à contre-courant (10) disposée dans une région prise en sandwich entre un premier bord (1a) et un deuxième bord (1b) qui sont des bords opposés d'un hexagone, la première partie à contre-courant (10) comportant une pluralité de troisièmes voies d'écoulement s'étendant parallèlement au premier bord (1a) et au deuxième bord (1b),
une première partie de distributeur (12) disposée dans une région délimitée par un troisième bord (1c) et un quatrième bord (1d) de l'hexagone disposé d'un côté du premier bord (1a) et du deuxième bord (1b) et de la première partie à contre-courant (10), la première partie de distributeur (12) comportant une pluralité de premières nervures (12a) s'étendant à partir du troisième bord (1c) qui est un bord adjacent au premier bord (Ia), du troisième bord (1c) et du quatrième bord (1d), le long du quatrième bord (1d) vers la première partie à contre-courant (10), et
une deuxième partie de distributeur (14) disposée dans une région délimitée par un cinquième bord (1e) et un sixième bord (1f) de l'hexagone disposé sur un côté opposé du premier bord (1a) et du deuxième bord (1b) et de la première partie à contre-courant (10), la deuxième partie de distributeur (14) comportant une pluralité de deuxièmes nervures (14a) s'étendant à partir du cinquième bord (1e) qui est un bord adjacent au deuxième bord (1b), du cinquième bord (1e) et du sixième bord (1f), le long du sixième bord (1f) vers la première partie à contre-courant (10),
chacune des secondes plaques de séparation (2) comporte
une seconde partie à contre-courant (20) disposée dans une région prise en sandwich entre un septième bord (2a) et un huitième bord (2b) qui sont des bords opposés d'un hexagone, la seconde partie à contre-courant (20) comportant une pluralité de quatrièmes voies d'écoulement s'étendant parallèlement au septième bord (2a) et au huitième bord (2b),
une troisième partie de distributeur (24) disposée dans une région délimitée par un neuvième bord (2c) et un dixième bord (2d) de l'hexagone disposé d'un côté du septième bord (2a) et du huitième bord (2b) et de la seconde partie à contre-courant (20), la troisième partie de distributeur (24) comportant une pluralité de troisièmes nervures (24a) s'étendant à partir du dixième bord (2d) qui est un bord adjacent au huitième bord (2b), du neuvième bord (2c) et du dixième bord (2d), le long du neuvième bord (2c) vers la seconde partie à contre-courant (20), et
une quatrième partie de distributeur (22) disposée dans une région délimitée par un onzième bord (2e) et un douzième bord (2f) de l'hexagone disposé sur un côté opposé du septième bord (2a) et du huitième bord (2b) et de la seconde partie à contre-courant (20), la quatrième partie de distributeur (22) comportant une pluralité de quatrièmes nervures (22a) s'étendant à partir du douzième bord (2f) qui est un bord adjacent au septième bord (2a), du onzième bord (2e) et du douzième bord (2f), le long du onzième bord (2e) vers la seconde partie à contre-courant (20),
les premières plaques de séparation (1) et les secondes plaques de séparation (2) sont empilées en alternance de telle sorte que le premier bord (1a) est placé sur le septième bord (2a), et le troisième bord (1c) est placé sur le neuvième bord (2c), la première entrée (11) est un espace entre le troisième bord (1c) et le neuvième bord (2c), la première sortie (13) est un espace entre le cinquième bord (1e) et le onzième bord (2e), la seconde entrée (21) est un espace entre le douzième bord (2f) et le sixième bord (1f), la seconde sortie (23) est un espace entre le dixième bord (2d) et le quatrième bord (1d), les premières voies d'écoulement (F1 à F5) sont formées par les premières nervures (12a), les troisièmes voies d'écoulement et les deuxièmes nervures (14a), et les deuxièmes voies d'écoulement (G1 à G5) sont formées par les quatrièmes nervures (22a), les quatrièmes voies d'écoulement et les troisièmes nervures (24a),
une direction d'extension d'une cinquième nervure qui est l'une de la pluralité de premières nervures (12a) de la première partie de distributeur (12) est plus proche d'une direction d'extension (F3) des troisièmes voies d'écoulement qu'une direction d'extension d'une sixième nervure qui est une nervure de la pluralité de premières nervures (12a) plus proche du quatrième bord (1d) que la cinquième nervure,
une direction d'extension d'une septième nervure qui est l'une de la pluralité de secondes nervures (14a) de la deuxième partie de distributeur (14) est plus proche de la direction d'extension (F3) des troisièmes voies d'écoulement qu'une direction d'extension d'une huitième nervure qui est une nervure de la pluralité de deuxièmes nervures (14a) plus proche du sixième bord (1f) que la septième nervure,
une direction d'extension d'une neuvième nervure qui est l'une de la pluralité de troisièmes nervures (24a) de la troisième partie de distributeur (24) est plus proche d'une direction d'extension des quatrièmes voies d'écoulement qu'une direction d'extension d'une dixième nervure qui est une nervure de la pluralité de troisièmes nervures (24a) plus proche du neuvième bord (2c) que la neuvième nervure,
une direction d'extension d'une onzième nervure qui est l'une de la pluralité de quatrièmes nervures (22a) de la quatrième partie de distributeur (22) est plus proche de la direction d'extension des quatrièmes voies d'écoulement qu'une direction d'extension d'une douzième nervure qui est une nervure de la pluralité de quatrièmes nervures (22a) plus proche du onzième bord (2e) que la onzième nervure,
chacune des premières nervures (12a), des deuxièmes nervures (14a), des troisièmes nervures (24a) et des quatrièmes nervures (22a) comporte une nervure centrale (121, 141), une nervure amont (120, 142) disposée en amont de la nervure centrale (121, 141) et une nervure aval (122, 140) disposée en aval de la nervure centrale (121, 141), la nervure centrale (121, 141) a une forme linéaire, et la nervure amont (120, 142) et la nervure aval (122, 140) ont une forme incurvée, **caractérisé en ce que**
une extrémité aval de la nervure aval (122) de chacune des premières nervures (12a) fait face à un bord amont de la première partie à contre-courant (10) sur l'ensemble d'un espace (Δt), la nervure aval (122) de chacune des premières nervures (12a) a une forme d'arc, et une ligne d'extension virtuelle (125) de la nervure aval (122) de chacune des premières nervures (12a) touche une ligne droite indiquant la direction d'extension (F3) des troisièmes voies d'écoulement,
une extrémité amont de la nervure amont (142) de chacune des deuxièmes nervures (14a) fait face à un bord aval de la première partie à contre-courant (10) sur l'ensemble d'un espace, la nervure amont (142) de chacune des deuxièmes nervures (14a) a une forme d'arc, et une ligne d'extension virtuelle de la nervure amont (142) de chacune des deuxièmes nervures (14a) touche une ligne droite indiquant la direction d'extension (F3) des troisièmes voies d'écoulement,
une extrémité amont de la nervure amont de chacune des troisièmes nervures (24a) fait face à un bord aval de la seconde partie à contre-courant (20) sur l'ensemble d'un espace, la nervure amont de chacune des troisièmes nervures (24a) a une forme d'arc, et une ligne d'extension virtuelle de la nervure amont de chacune des troisièmes nervures (24a) touche une ligne droite indiquant la direction d'extension des quatrièmes voies d'écoulement, et
une extrémité aval de la nervure aval de chacune des quatrièmes nervures (22a) fait face à un bord amont de la seconde partie à contre-courant (20) sur l'ensemble d'un espace, la nervure aval de chacune des quatrièmes nervures (22a) a une forme d'arc, et une ligne d'extension virtuelle de la nervure aval de chacune des quatrièmes nervures (22a) touche une ligne droite indiquant la direction d'extension des quatrièmes voies d'écoulement.

2. Élément d'échange thermique (100) selon la revendication 1, dans lequel
des directions d'extension de la pluralité de premières nervures (12a) de la première partie de distributeur (12) se rapprochent de la direction d'extension (F3) des troisièmes voies d'écoulement à mesure que la distance du quatrième bord (1d) augmente,
des directions d'extension de la pluralité de deuxièmes nervures (14a) de la deuxième partie de distributeur (14) se rapprochent de la direction d'extension (F3) des troisièmes voies d'écoulement à mesure que la distance du sixième bord (1f) augmente,
des directions d'extension de la pluralité de troisièmes nervures (24a) de la troisième partie de distributeur (24) se rapprochent de la direction d'extension des quatrièmes voies d'écoulement à mesure que la distance du neuvième bord (2c) augmente, et
des directions d'extension de la pluralité de quatrièmes nervures (22a) de la quatrième partie de distributeur (22) se rapprochent de la direction d'extension des quatrièmes voies d'écoulement à mesure que la distance du onzième bord (2e) augmente.

3. Élément d'échange thermique (100) selon la revendication 1 ou 2, dans lequel
une direction d'extension de la nervure amont (120, 142) est plus proche de la direction d'extension (F3) des troisièmes voies d'écoulement qu'une direction d'extension de la nervure centrale (121, 141), et
une direction d'extension de la nervure aval (122, 140) est plus proche de la direction d'extension (F3) des troisièmes voies d'écoulement que la direction d'extension de la nervure centrale (121, 141).

4. Élément d'échange thermique (100) selon la revendication 3, dans lequel
les premières nervures (12a), les deuxièmes nervures (14a), les troisièmes nervures (24a) et les quatrièmes nervures (22a) ont une forme de S comportant une ligne droite ou une forme de S inversé comportant une ligne droite.

5. Élément d'échange thermique (100) selon l'une quelconque des revendications 1 à 4, dans lequel
une extrémité amont de la nervure amont (120) de chacune des premières nervures (12a) est perpendiculaire au troisième bord (1c),
une extrémité aval de la nervure aval (140) de chacune des deuxièmes nervures( 14a) est perpendiculaire au cinquième bord (1e),
une extrémité aval de la nervure aval de chacune des troisièmes nervures (24a) est perpendiculaire au dixième bord (2d), et
une extrémité amont de la nervure amont de chacune des quatrièmes nervures (22a) est perpendiculaire au douzième bord (2f).

6. Élément d'échange thermique (100) selon l'une quelconque des revendications 1 à 5, dans lequel
une courbure de la nervure amont (120) de la première nervure (12a) est plus importante qu'une courbure de la nervure aval (122) de la première nervure (12a),
une courbure de la nervure amont de la quatrième nervure (22a) est plus importante qu'une courbure de la nervure aval de la quatrième nervure (22a),
une courbure de la nervure aval (140) de la deuxième nervure (14a) est plus importante qu'une courbure de la nervure amont (142) de la deuxième nervure (14a), et
la courbure de la nervure aval de la troisième nervure (24a) est plus importante que la courbure de la nervure amont de la troisième nervure (24a).

7. Élément d'échange thermique (100) selon l'une quelconque des revendications 1 à 6, dans lequel
les nervures amont (120) de la pluralité de premières nervures (12a) de la première partie de distributeur (12) ont des formes d'arc de même rayon,
les nervures aval (122) de la pluralité de premières nervures (12a) de la première partie de distributeur (12) ont des formes d'arc de différents rayons et augmentent en courbure à mesure qu'une distance du quatrième bord (1d) augmente,
les nervures aval (140) de la pluralité de deuxièmes nervures (14a) de la deuxième partie de distributeur (14) ont des formes d'arc de même rayon, et
les nervures amont (142) de la pluralité de deuxièmes nervures (14a) de la deuxième partie de distributeur (14) ont des formes d'arc de rayons différents et augmentent en courbure à mesure que la distance du sixième bord (1f) augmente.

8. Élément d'échange thermique (100) selon l'une quelconque des revendications 1 à 7, dans lequel
les nervures aval de la pluralité de troisièmes nervures (24a) de la troisième partie de distributeur (24) ont des formes d'arc de même rayon,
les nervures amont de la pluralité de troisièmes nervures (24a) de la troisième partie de distributeur (24) ont des formes d'arc de rayons différents et augmentent en courbure à mesure que la distance du neuvième bord (2c) augmente,
les nervures amont de la pluralité de quatrièmes nervures (22a) de la quatrième partie de distributeur (22) ont des formes d'arc de même rayon, et
les nervures aval de la pluralité de quatrièmes nervures (22a) de la quatrième partie de distributeur (22) ont des formes d'arc de rayons différents et augmentent en courbure à mesure que la distance du onzième bord (2e) augmente.

9. Appareil de ventilation à échange thermique (200) dans lequel est installé l'élément d'échange thermique (100) selon l'une quelconque des revendications 1 à 8.
